# FASCICULE DE BREVET EUROPEEN

(11) **EP 0 877 890 B1**
(45) Date de publication et mention de la délivrance du brevet: **10.09.2003**
(21) Numéro de dépôt: 97948988.7
(22) Date de dépôt: 03.12.1997
(51) Int. Cl.: F16L 21/03

(54) **CONDUIT METALLIQUE MODULAIRE A EMBOITEMENT, NOTAMMENT POUR L'EVACUATION DES FUMEES**
AUS EINZELNEN ELEMENTEN ZUSAMMENSTECKBARE ROHRLEITUNG AUS METALL, INSBESONDERE FÜR DIE RAUCHGASABFÜHRUNG
MODULAR NESTING METAL CONDUIT, IN PARTICULAR FOR DISCHARGING FUMES

(30) Priorité: 04.12.1996 FR 9614857
(43) Date de publication de la demande: 18.11.1998
(73) Titulaire: Constructions Metalliques Mecaniques Beirens C.M.M. Beirens (S.A.), 36500 Buzancais (FR)
(72) Inventeur: BEIRENS, Marcel, F-36500 Buzancais (FR)
(74) Mandataire: Viard, Jean
(86) Numéro de dépôt international: FR9702187
(87) Numéro de publication internationale: WO98025066

(56) Documents cités:
- EP-A- 0 611 875
- EP-A- 0 713 044
- DE-U- 1 884 128

## Description

La présente invention a pour objet un conduit métallique modulaire destiné en particulier, mais non exclusivement, à l'évacuation de fumées de chaudières.

De tels conduits sont, d'une manière générale, connus et sont constitués d'éléments pouvant être raccordés comprenant chacun à l'une de ses extrémités un embout mâle avec un rétreint et, à son autre extrémité, un embout femelle expansé.

Dans les installations domestiques dans lesquelles il s'agit d'évacuer les gaz de combustion d'une cuisinière, un raccordement entre deux éléments de conduit adjacents résulte généralement d'un assemblage par friction, les éléments successifs étant ainsi simplement emboîtés. Il est, par ailleurs, connu de disposer sur la longueur des tuyaux ainsi assemblés des colliers permettant la fixation des tuyaux sur une paroi proche, ces colliers permettant éventuellement de renforcer la liaison entre deux éléments successifs.

Les cheminées de fort diamètre destinées aux installations industrielles sont généralement réalisées soit en béton, soit en acier, les éléments d'acier étant réunis par des brides soudées en usine et transportés directement sur le site.

Pour les installations de moyenne importance, on utilise actuellement des conduits modulaires constitués de tubes raccordés bout à bout. Des moyens d'étanchéité peuvent être prévus entre deux tubes mais malheureusement, cette étanchéité est généralement insuffisante vis à vis des condensats de fumées, notamment dans le cas où le conduit est utilisé en contre pente. Par ailleurs, il n'est pas possible de les couper à longueur pour que, par exemple, les colliers correspondent à des joints de pierres de parement.

EP 0 717 044 révèle un conduit métallique modulaire comprenant des tubes intérieurs munis d'une extrémité mâle, et d'une extrémité femelle dans laquelle l'extrémité mâle du tube adjacent est engagée, l'élément femelle comprenant une chambre de repli dans laquelle est inséré un joint d'étanchéité entre l'extrémité mâle et l'extrémité femelle.

L'extrémité mâle porte une nervure périphérique en saillie vers l'extérieur. Un collier est fixé par un bord périphérique sur la nervure périphérique et par un autre bord périphérique apposé sur la chambre de repli, qui fait elle aussi saillie vers l'extérieur du conduit. Ce collier solidarise les tubes intérieurs adjacents. Enfin l'extrémité mâle se termine par une surface tronconique venant en appui sur une surface correspondante de l'extrémité femelle pour renforcer encore l'étanchéité.

Ce conduit présente le défaut de ne pas être auto-portant, et doit être arrimé au sol ou à une autre structure.

Selon l'invention, le conduit métallique modulaire à emboîtement, notamment pour l'évacuation des fumées, comprenant au moins un conduit intérieur composé d'éléments raccordés dont chacun présente une extrémité mâle et une extrémité femelle s'emboîtant successivement et des moyens pour réunir deux éléments tubulaires successifs est caractérisé en ce que l'extrémité femelle comporte un joint à lèvre avec chambre de repli, et en ce que le conduit comprend un conduit extérieur entourant le conduit intérieur monté en opposition au sens des éléments de conduit intérieur, deux éléments de conduit (intérieur et extérieur) étant assemblés par un joint collé en tête ou par une soudure, et en ce que le conduit comprend en outre, une enveloppe modulaire assurant l'assemblage de deux éléments au moyen de colliers en entourant ceux-ci, l'assemblage de l'enveloppe extérieure étant réalisée par superposition de deux bords d'éléments de l'enveloppe, réalisée au milieu de la longueur standard des éléments par des colliers.

On obtient ainsi un conduit auto-stable et auto-portant c'est-à-dire dont la stabilité est assurée en un seul point par ancrage au sol, ce qui supprime la nécessité d'un haubanage ou autre moyen pour assurer la stabilité.

Par ailleurs, le conduit extérieur présente dans sa partie mâle et dans sa partie femelle des gorges dans lesquelles viennent s'introduire les branches du collier.

Avantageusement, l'enveloppe présente sensiblement au milieu de sa hauteur, deux gorges correspondant aux gorges du conduit extérieur.

Par exemple, l'enveloppe présente au voisinage de ses extrémités un jonc d'appui d'un collier.

Selon un second aspect, l'invention concerne un collier comprenant une bande métallique repliée sur elle-même et des moyens de tension, caractérisé en ce qu'il comprend une première extrémité présentant un crochet, la seconde extrémité présentant une rainure ou cavité dans laquelle se loge le crochet par élasticité.

Avantageusement, l'extrémité présente un évasement dans lequel pénètre l'extrémité.

Par exemple, la partie centrale de l'extrémité s'insère dans un dégagement de l'extrémité.

D'autres caractéristiques et avantages de la présente invention apparaîtront au cours de la description qui va suivre de modes particuliers de réalisation, donnés uniquement à titre d'exemple non limitatif, en regard des dessins qui représentent :
- La figure 1, une vue d'un conduit selon l'invention ;
- la figure 2, une vue d'un conduit identique dont l'un des éléments a été coupé en longueur ;
- la figure 3, une vue à échelle agrandie du profil de l'élément femelle ;
- la figure 4, une vue du conduit extérieur ;
- la figure 5, une vue du même produit après coupe à longueur ;
- la figure 6, une vue d'un assemblage conduit intérieur, conduit extérieur ;
- la figure 6a, une alternative du montage des conduits interne et externe ;
- la figure 7, le même assemblage que sur la figure 6 après coupe à longueur ;
- la figure 8, une vue en coupe d'une cheminée à deux conduits revêtus d'une enveloppe extérieure ;
- la figure 9, une vue de face de la zone de liaison du collier ;
- la figure 10, une vue partielle des deux extrémités du collier avant leur assemblage en coupe par un plan perpendiculaire à celui de la figure 9 ;
- la figure 11, dans les mêmes conditions que sur la figure 10, les extrémités du collier après assemblage.
- La figure 12, une vue en perspective de la zone d'assemblage.

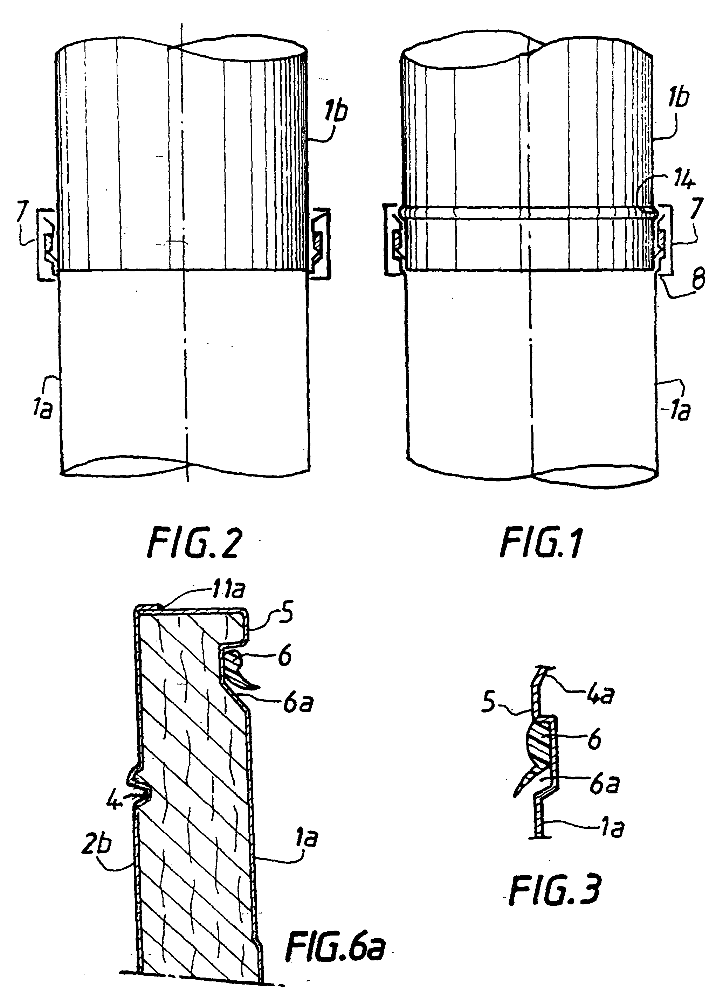

Sur la figure 1, est représenté l'assemblage de deux éléments du conduit par une extrémité femelle du conduit 1a et une extrémité mâle du conduit 1b. Le conduit mâle peut présenter au voisinage de sa partie inférieure un jonc 14 venant prendre appui sur un bord évasé 4a de la partie expansée de l'élément la (qui est représenté à échelle agrandie sur la figure 3). Pratiquement le jonc 14 peut être supprimé dans la mesure où il n'assure aucune fonction mécanique ou d'étanchéité. C'est ce qui se produit lorsque le tube a été coupé.

Au-dessous du bord 4a, on trouve dans un logement 5, et un joint à lèvre 6 dont la lèvre vient porter contre la paroi externe de l'élément 1b après montage de celui-ci à l'intérieur de la partie femelle de l'élément 1a. Le joint 6 est collé à l'intérieur de la couronne périphérique 5, et au-dessous de la lèvre 6, est prévue une chambre de repli 6a qui a pour but après la pose de créer une surpression appliquant la lèvre 6 contre l'élément 1b. Le joint à lèvre 6 est, par exemple, en silicone dans le cas des conduits devant travailler à une température inférieure ou égale à 200°C. Il peut être remplacé par un joint torique en fibres céramiques pour les températures supérieures.

Conformément à l'invention, et comme cela apparaît sur la figure 2, il est possible de couper l'élément supérieur 1b dans sa partie mâle en vue d'adapter la longueur du conduit aux conditions de pose. Comme il ressort clairement de la figure 2, l'étanchéité est conservée puisque le joint à lèvre exerce la même action d'étanchéification. Le jonc 14 a été coupé. La partie inférieure de l'élément 1b repose, bien entendu, dans un décrochement 8 prévu à l'extrémité supérieure femelle de l'élément 1a. Le contact mécanique et l'auto-centrage sont ainsi assurés. La zone de liaison entre les éléments 1a et 1b est ceinturée par un collier 7 représenté schématiquement sur les figures 1 et 2.

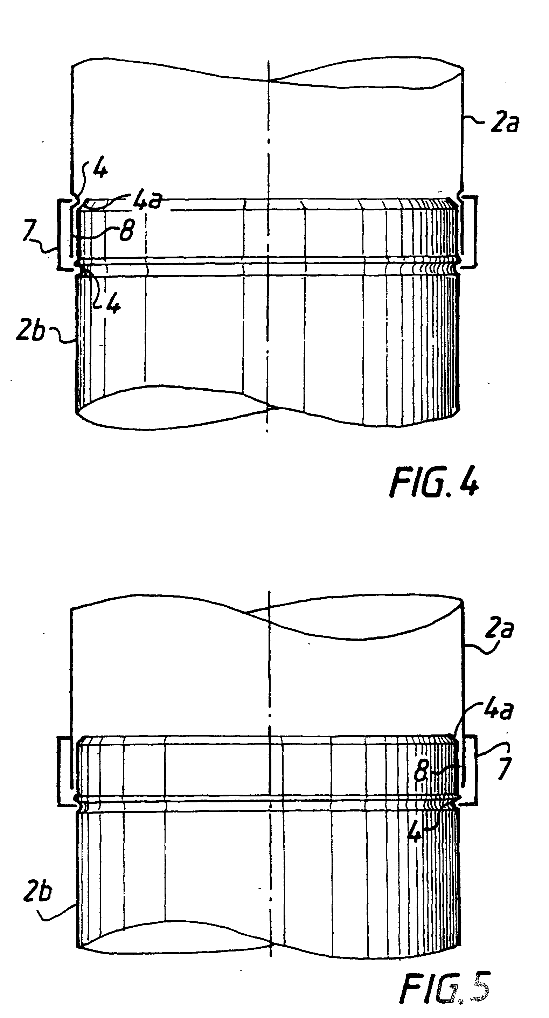

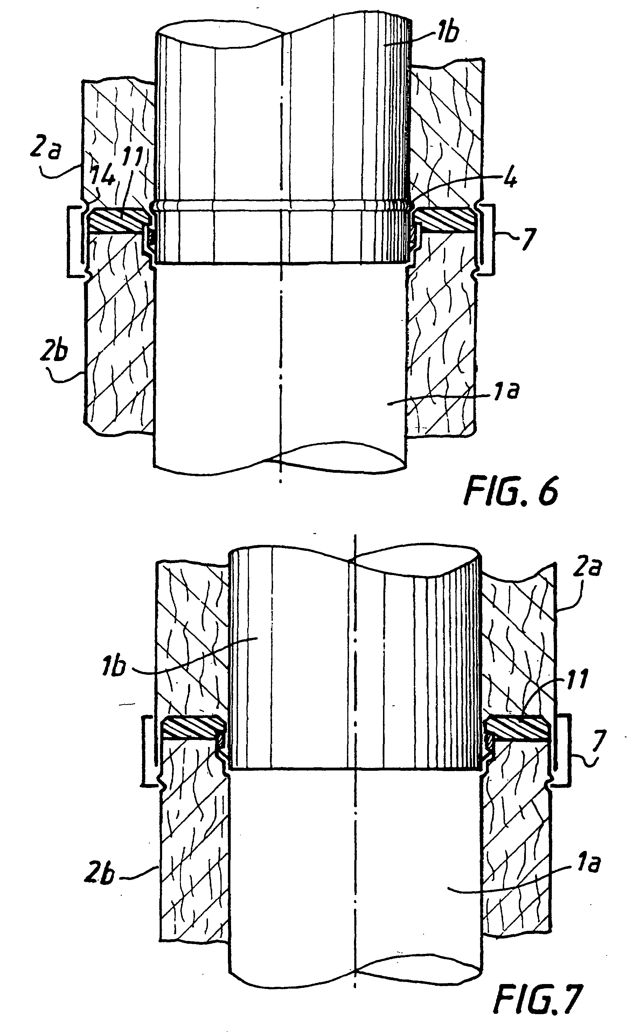

Ce conduit peut être utilisé tel quel. Toutefois, il est souvent nécessaire de l'isoler et, comme connu en soi, on prévoit à l'extérieur du conduit intérieur 1, une enveloppe ou conduit extérieur 2 telle que celle qui est représentée sur les figures 4 et 5. Cette enveloppe qui est, bien entendu, de diamètre supérieur au diamètre du conduit 1 peut servir à l'aération des chaufferies et est assemblée selon le même dispositif d'assemblage que celui du conduit intérieur de sorte qu'il puisse être coupé en partie basse pour s'adapter aux conditions de pose. Dans ce cas, aucun joint n'est prévu, l'étanchéité n'étant pas indispensable. Ce conduit peut être utilisé seul pour réaliser une ventilation haute. Comme cela apparaît sur la figure 4, l'élément 2a est l'élément femelle alors que l'élément 2b est l'élément mâle. A la partie supérieure de l'élément 2b se trouve une gorge 4 dans laquelle pénètre l'un des côtés du collier 7. De même, dans sa partie inférieure, l'élément 2a présente également une gorge 4 dans laquelle pénètre l'autre côté du collier 7. Au-dessus de la gorge 4 de l'élément 2b est prévu un rétreint 8 qui pénètre à l'intérieur de l'élément 2a.

Comme cela apparaît sur la figure 5, lorsque l'élément 2a est coupé en partie basse à la hauteur voulue, sa gorge 4 disparaît et l'agrafage par un collier 7 reste le même. Dans des conduits de ce type, l'apaisseur de la tôle est de l'ordre d'un demi millimètre ou plus en fonction de la section des conduits de fumée. C'est à dire que la représentation utilisée sur la figure ne correspond pas exactement à la réalité.

Le conduit à double enveloppe et représenté sur les fugures 6 et 7. Il se compose d'un conduit intérieur selon la figure 1 monté à l'intérieur d'un conduit extérieur selon la figure 4. Deux éléments concentriques 1 et 2 sont assemblés par un joint collé en tête 11 qui sert également d'entretoise, il est possible d'introduire entre les conduits 1 et 2, un isolant 12 tel que la laine minérale ou des fibres céramiques si l'on désire une isolation du conduit après coupe, le jonc 14 de l'élément 1b et la gorge 4 de l'élément 2a ayant été coupés.

La figure 6a, représente une alternative d'assemblage des conduits interne et externe à leur partie supérieure. Sur cette figure, on n'a représenté que l'un de côtés du conduit. On y retrouve les élément mentionnés ci-dessus à savoir le conduit intérieur la et le conduit extérieur 2b, le joint à lèvre 6 et sa chambre de repli 6a, le joint à lèvre 6 assurant l'étanchéité avec l'élément 1b supérieur de l'assemblage (non représenté). Conformément à ce mode de réalisation, le joint en tête 11 est supprimé et remplacé par une soudure étanche qui réunit l'élément du conduit interne 1a à l'élément 2b de conduit externe. Dans certaines conditions de travail, ce mode de réalisation est préféré car il assure une étanchéité parfaite à un coût moindre. Cette disposition peut, bien évidemment, être utilisé dans le mode de montage à enveloppe auto stable qui sera décrit ci-dessous.

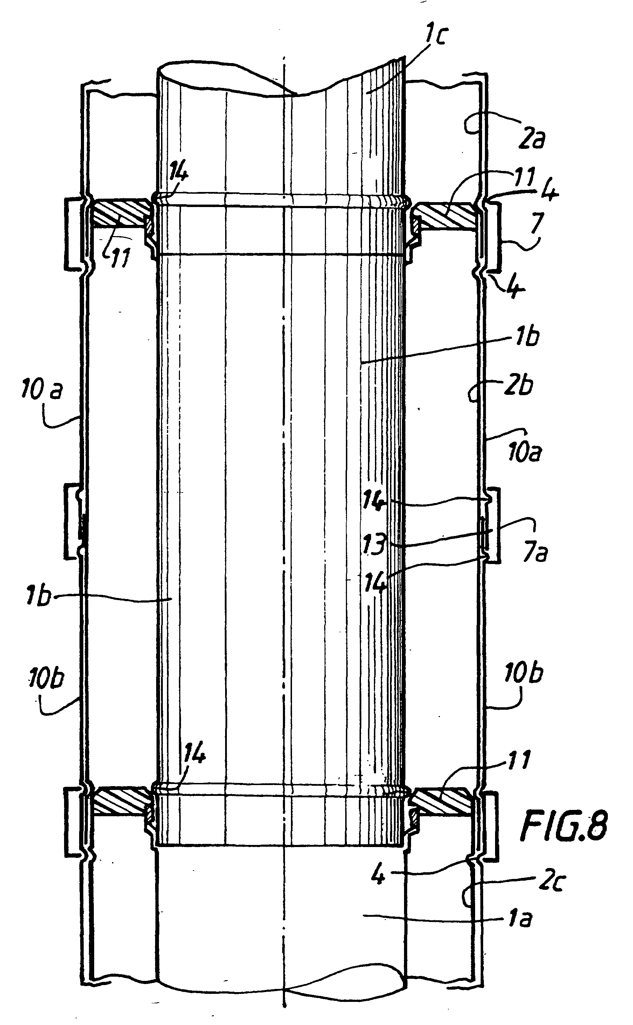

La figure 8 représente un autre mode de réalisation de l'invention destiné à constituer une cheminée auto-stable à trois enveloppes. On retrouve sur cette figure les éléments 1a, 1b, 1c constituant le conduit intérieur avec le montage par joint à lèvre 6 précédemment décrit et, représentés partiellement, trois éléments d'enveloppe extérieure 2a, 2b, 2c, les deux conduits étant reliés par des joints 11 avec introduction ou non de laine minérale ou analogue entre les deux conduits. Mais cet espace 12 peut être laissé libre en vue de l'introduction dans le foyer d'air extérieur circulant à contre-courant des fumées qui vont de haut en bas dans le conduit 1 qui joue ainsi le rôle d'échangeur de chaleur et réchauffe l'air entrant tout en refroidissant les fumées sortantes.

Dans ce mode de réalisation, il n'est possible d'assembler que des éléments de longueur standard composés d'un conduit intérieur 1 et d'un conduit extérieur 2. En effet, à la périphérie de l'enveloppe extérieure 2 est appliquée une enveloppe porteuse ou coquille 10 qui est elle-même composée d'éléments 10a, 10b etc... assemblés par des colliers 7a avec superposition de deux bords adjacents 13. La coquille 10 se présente d'une manière générale comme une virole ou cylindre creux assurant l'assemblage de deux éléments 1, 2 successifs.

Comme cela apparaît sur la figure 8, l'enveloppe ou coquille 10 présente des gorges 4 disposées sensiblement en regard des gorges 4 de l'élément 2, et qui s'encastrent dans celles-ci. L'espacement de deux séries de gorges 4 des éléments 10, est le même que l'espacement des deux séries des gorges 4 de l'enveloppe 10 des éléments 2. Au milieu de chaque élément 10, sont formés deux joncs 14 sur la coquille 10 destinés à maintenir un collier 7a d'assemblage de l'enveloppe extérieure. On voit que cet assemblage se fait sur la partie rigide au milieu et entre deux assemblages de deux éléments 1, 2. Les trois enveloppes 1, 2 et 10 sont ainsi disposées en quinconce ce qui assure une bonne rigidité et permet la reprise de charge en pied des conduits sur une grande hauteur avec reprise de stabilité en tête. Ce montage assure la stabilité en dépassement au-dessus de la dernière attache sans mât et sans haubanage suivant la région d'implantation.

Les colliers 7 peuvent être du genre SERFLEX (marque déposée). Toutefois dans ces colliers, la tension latérale exercée ne résulte que de la présence d'une ou deux soudures.

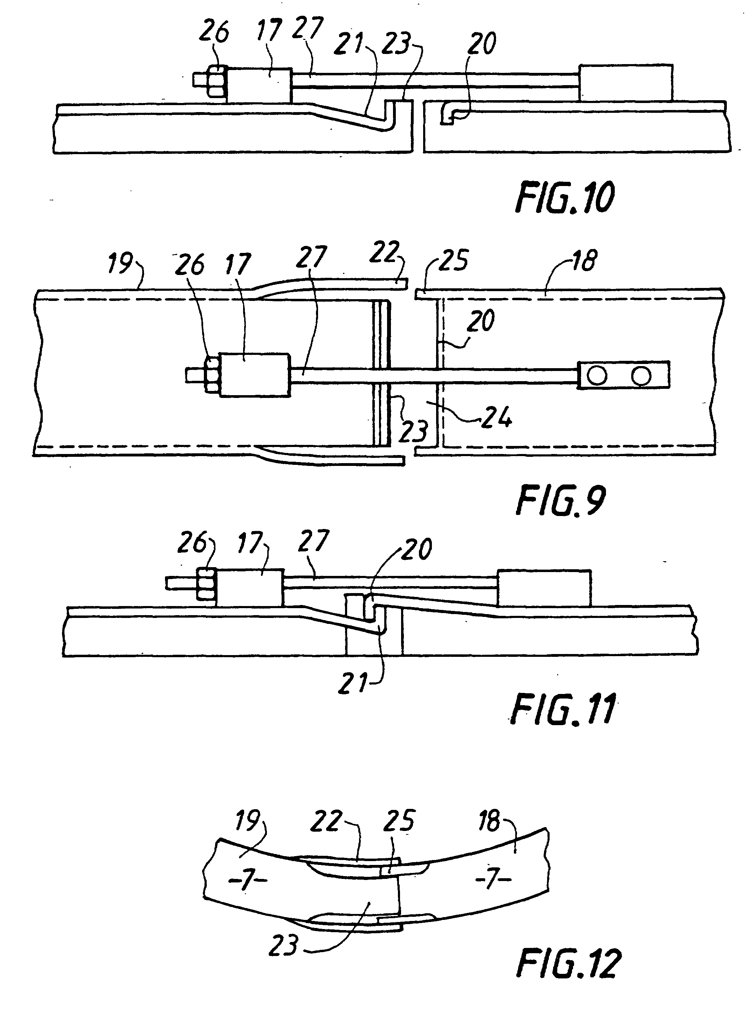

Selon l'invention, on utilise, de préférence, un collier tel que celui qui est représenté sur les figures 9 à 12 dans lequel la résistance à la traction résulte de la structure du collier. Sur la figure 9, on voit que l'extrémité 19 du collier 7 présente deux branches écartées 22 à l'intérieur desquelles sera insérée la seconde extrémité 18 par les bords 25. La partie centrale 23 de l'extrémité 19 présente une cavité ou dépression 21 qui apparaît sur la figure 10.

Comme représenté sur la figure 11, après rapprochement des extrémités 18 et 19, le crochet 20 formé dans la partie centrale s'insère par élasticité dans la cavité 21 de manière à bloquer les deux extrémités l'une sur l'autre, le recouvrement des bords extérieurs empêchent tout glissement du crochet 20 dans la cavité 21.

Dans ces conditions, c'est le collier lui-même qui assure son blocage. Mais celui-ci est verrouillé par un organe mécanique qui n'assure aucune tension mais maintient le collier en position.

Comme cela apparaît sur les figures, un manchon 17 est fixé sur l'extrémité 19 et reçoit dans un alésage intérieur une tige filetée 27 soudée d'un côté sur l'extrémité 18 et maintenue contre le manchon 17 par un écrou 29. L'ensemble 17, 26, 27 n'a pour but que de maintenir en position les différentes parties du collier. Contrairement à la technique antérieure, ce n'est pas cet ensemble qui assure la tension mais le collier lui-même.

Bien que la description ci-dessus ait été donnée en prenant comme exemple un conduit de fumées, l'invention peut être appliquée à tout type de conduits tels que les conduits de climatisation.

## Revendications

1. Conduit métallique modulaire à emboîtement notamment pour l'évacuation de fumées, comprenant au moins un conduit intérieur (1) composé d'éléments (1a, 1b, 1c) raccordés dont chacun présente une extrémité mâle et une extrémité femelle d'emboîtement avec la partie mâle d'un élément adjacent, deux éléments adjacents étant réunis par un collier (7), **caractérisé en ce que** l'extrémité femelle d'un élément (1) inclut un joint (6) et une chambre de repli (6a), **en ce que** ce conduit métallique comprend un conduit extérieur (2), entourant le conduit intérieur (1), la partie femelle (2a) étant montée en sens inverse de la partie femelle (1a), deux éléments de conduit intérieur et extérieur (1, 2) étant assemblés par un joint (11) collé en tête ou par une soudure (11a), et **en ce que** ce conduit métallique comprend en outre une enveloppe (10) modulaire assurant l'assemblage de deux éléments successifs (10a, 10b) au moyen de colliers (7) en entourant ceux-ci, l'assemblage de l'enveloppe extérieure étant réalisé par superposition de deux bords (13) d'éléments de l'enveloppe, réalisée au milieu de la longueur standard des éléments (1, 2), par des colliers (7a).

2. Conduit selon la revendication 1, **caractérisé en ce que** le conduit extérieur (2) présente dans sa partie mâle et dans sa partie femelle des gorges (4) dans lesquelles viennent s'introduire les branches du collier (7).

3. Conduit selon l'une quelconque des revendications précédentes, **caractérisé en ce que** l'enveloppe (10) présente sensiblement au milieu de sa hauteur, deux gorges (4) correspondant aux gorges (4) du conduit extérieur (2).

4. Conduit selon l'une quelconque des revendications précédentes, **caractérisé en ce que** l'enveloppe (10) présente au voisinage de ses extrémités un jonc (14) d'appui d'un collier (7a).

5. Collier selon l'une quelconque des revendications précédentes, comprenant une bande métallique (7) repliée sur elle-même et des moyens de tension (17), **caractérisé en ce qu'**il comprend une première extrémité (18) présentant un crochet (20), la seconde extrémité (19) présentant une rainure ou cavité (21) dans laquelle se loge le crochet (20) par élasticité.

6. Collier selon la revendication 5, **caractérisé en ce que** l'extrémité (19) présente un évasement (22) dans lequel pénètre l'extrémité (18).

7. Collier selon les revendications 5 et 6, **caractérisé en ce que** la partie centrale (23) de l'extrémité (19) s'insère dans un dégagement (24) de l'extrémité (18).

## Patentansprüche

1. Aus einzelnen Elementen zusammensteckbare Rohrleitung aus Metall, insbesondere für die Rauchgasabführung, umfassend mindestens eine innere Leitung (1) zusammengesetzt aus verbundenen Elementen (1a, 1b, 1c), deren jedes ein männliches Ende und ein weibliches Ende zum Zusammenstecken mit dem männlichen Teil eines benachbarten Elements aufweist, wobei zwei benachbarte Elemente durch eine Schelle (7) zusammengeschlossen sind, **dadurch gekennzeichnet, dass** das weibliche Ende eines Elements (1) ein Anschlussstück (6) und einen Hohlfalz (6a) aufweist, dadurch, dass die metallische Leitung eine äußere Leitung (2) umfasst, die die innere Leitung (1) umgibt, wobei der weibliche Teil (2a) in umgekehrter Richtung wie der weibliche Teil (1a) angebracht ist, wobei zwei innere und äußere Leitungselemente (1, 2) durch ein oben angeklebtes Verbindungsstück (11) oder durch eine Schweißnaht (11a) zusammengefügt sind, und dadurch, dass die metallische Leitung außerdem eine Hülle (10) aus einzelnen Elementen umfasst, die die Zusammenfügung von zwei aufeinanderfolgenden Elementen (10a, 10b) mittels Schellen (7) gewährleistet, die sie umgeben, wobei die Zusammenfügung der äußeren Hülle durch übereinander Setzen von zwei Rändern (13) von Hüllenelementen vorgenommen ist, die in der Mitte der Standardlänge der Elemente (1, 2) durch Schellen (7a) vorgenommen ist.

2. Leitung nach Anspruch 1, **dadurch gekennzeichnet, dass** die äußere Leitung (2) in ihrem männlichen Teil und ihrem weiblichen Teil Vertiefungen (4) aufweist, in die die Ränder der Schelle (7) eingreifen.

3. Leitung nach einem der vorhergehenden Ansprüche, **dadurch gekennzeichnet, dass** die Hülle (10) im Wesentlichen in der Mitte ihrer Höhe zwei Vertiefungen (4) aufweist, die den Vertiefungen (4) der äußeren Leitung (2) entsprechen.

4. Leitung nach einem der vorhergehenden Ansprüche, **dadurch gekennzeichnet, dass** die Hülle (10) neben ihren Enden einen Stützring (14) für eine Schelle (7a) aufweist.

5. Schelle nach einem der vorhergehenden Ansprüche, umfassend ein nach innen eingefaltetes Metallband (7) und Spannmittel (17), **dadurch gekennzeichnet, dass** sie ein erstes Ende (18) umfasst, das einen Haken (20) aufweist, ein zweites Ende (19), das eine Nut oder einen Hohlraum (21) aufweist, in die (den) der Haken (20) elastisch eintritt.

6. Schelle nach Anspruch 5, **dadurch gekennzeichnet, dass** das Ende (19) eine Erweiterung (22) aufweist, in die das Ende (18) eindringt.

7. Schelle nach den Ansprüchen 5 und 6, **dadurch gekennzeichnet, dass** der zentrale Teil (23) des Endes (19) in einen Freistich (24) des Endes (18) eingesetzt wird.

## Claims

1. Modular nesting metal conduit in particular for discharging fumes, comprising at least one internal conduit (1) made of elements (1a, 1b, 1c) connected, each presenting a male extremity and a female extremity nesting with the male part of an adjacent element, two adjacent elements being linked by a collar (7) **characterised in that** the female extremity of an element (1) includes a joint (6) and a fold chamber (6a), **in that** this metal conduit consists of an external conduit (2) surrounding the internal conduit (1), the female part (2a) being mounted in the opposite way of the female part (1a), two elements of internal and external conduit (1,2) being assembled by a joint (11) head glued or welded (11a) and **in that** this metal conduit consists as well of a modular envelope (10) insuring the assembly of the two successive elements (10a, 10b) by means of collars (7) by surrounding these, the external envelope assembly being made by overlapping of two edges (13) of envelope elements, realised in the middle of the standard length of the elements (1,2) by some collars (7a).

2. A conduit according to claim 1, **characterised in that** the external conduit (2) presents in its male element and in its female element grooves (4) in which are inserted the branches of the collar (7).

3. A conduit according to any previous claim, **characterised in that** the envelope (10) presents at about the middle of its length, two grooves (4) corresponding to the grooves (4) of the external conduit (2).

4. Collar according to any previous claims, **characterised in that** the envelope (10) presents near its end a retaining ring (14) for supporting a collar (7a).

5. A conduit according to any previous claim comprising of a metal strip (7) folded on itself and tension means (17), **characterised in that** it comprises a first extremity (19) presenting a hook (20), the second extremity (19) presenting a groove or cavity (21) in which is housed the hook (20) by elasticity.

6. Collar according to claim 5, **characterised in that** the extremity (19) presents a flare (22) in which the extremity (18) enters.

7. Collar according to claim 5 and 6, **characterised in that** the central part (23) of the extremity (19) inserts itself in a clearance (24) of the extremity (18).
